(19) Europäisches Patentamt
European Patent Office
Office européen des brevets

(11) **EP 1 609 663 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(51) Int Cl.:
**B60N 2/00** *(2006.01)* **B60R 21/01** *(2006.01)*

(21) Anmeldenummer: **04014871.0**

(22) Anmeldetag: **24.06.2004**

(54) **Vorrichtung und Verfahren zum Überprüfen und/oder Kalibrieren einer in einem Fahrzeugsitz angeordneten Insassenerkennungseinrichtung**

Process and device for controlling and/or calibrating a vehicle seat occupant surveillance device

Procédé et dispositif de contrôle et/ou de calibrage d'appareils de surveillance occupant d'un siège de véhicule

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**28.12.2005 Patentblatt 2005/52**

(73) Patentinhaber: **Delphi Technologies, Inc. Troy, MI 48007 (US)**

(72) Erfinder: **Fischer, Thomas 57482 Wenden (DE)**

(74) Vertreter: **Manitz, Finsterwald & Partner GbR Postfach 31 02 20 80102 München (DE)**

(56) Entgegenhaltungen:
**US-A- 4 908 777 US-A- 6 020 812**
**US-A1- 2003 040 858 US-A1- 2003 120 379**

**Beschreibung**

Die Erfindung betrifft eine Vorrichtung und ein Verfahren zum Überprüfen und/oder Kalibrieren einer in einem Fahrzeugsitz angeordneten Insassenerkennungseinrichtung, bei der ein Kindersitz an einen Fahrzeugsitz andrückbar ist bzw. bei dem ein Fahrzeugsitz mit einem Kindersitz beaufschlagt wird und eine entsprechende Reaktion der Insassenerkennungseinrichtung des Fahrzeugsitzes ausgewertet wird.

Das Überprüfen bzw. Kalibrieren einer in einem Fahrzeugsitz angeordneten Insassenerkennungseinrichtung ist grundsätzlich bekannt, siehe z.B. US-A-2003/0040858. Ziel der Überprüfung ist es, herauszufinden, ob die Insassenerkennungseinrichtung eine Belegung des Fahrzeugsitzes, im vorliegenden Fall durch ein in einem Kindersitz sitzenden Kind, korrekt erfasst. Ist dies nicht der Fall, so kann die Insassenerkennungseinrichtung entsprechend korrigiert werden.

Problematisch ist, dass die Insassenerkennungseinrichtung nicht nur eine Vielzahl von baulich unterschiedlichen Kindersitzen erkennen muss, sondern dass diese Erkennung auch bei verschiedenen Einbaupositionen eines Kindersitzes, Befestigungen des Kindersitzes und Belegungen des Kindersitzes mit unterschiedlich schweren Kindern zuverlässig erfolgen muss.

Herkömmlicherweise erfolgt die Überprüfung bzw. Kalibrierung der Insassenerkennungseinrichtung, indem ein erster Kindersitz auf einen in einer Karosserie angeordneten Fahrzeugsitz aufgesetzt und mit einem Sicherheitsgurt an diesem verspannt wird. Eine entsprechende Reaktion der Insassenerkennungseinrichtung wird für unterschiedliche Gurtspannungen, Einbaupositionen und Belegungen des Kindersitzes mit verschiedenen Dummys erfasst und ausgewertet.

Diese Prozedur kann mit weiteren Kindersitzen durchgeführt und an mehreren Fahrzeugsitzen wiederholt werden, um aus allen vorhandenen Kindersitzen und Fahrzeugsitzen eine Testmatrix zu erstellen, anhand derer die Funktion der Insassenerkennungseinrichtung für die in der Praxis im Wesentlichen auftretenden Fälle beurteilbar bzw. einstellbar ist.

Da die Tests manuell durchgeführt werden, ergibt sich ein Problem mit der Zuverlässigkeit und Reproduzierbarkeit der einzelnen Tests. Ferner ist die Erstellung der Textmatrix sehr zeitaufwendig. Da zur Einstellung der Gurtspannungen außerdem ein Gurtsystem erforderlich ist, wie es auch in der Praxis vorhanden ist, ist zur Durchführung der Testreihen mindestens ein im Wesentlichen komplett ausgestattetes Kraftfahrzeug erforderlich. Dies wiederum erfordert einen erhöhten Platzbedarf der Testanordnung. Um die Testreihen unter kontrollierten extremen Klimabedingungen durchzuführen, sind außerdem geräumige Klimakammern zur Unterbringung der Kraftfahrzeuge erforderlich.

Der Erfindung liegt die Aufgabe zugrunde, eine Vorrichtung und ein Verfahren zu schaffen, welches eine beschleunigte und insbesondere zu zuverlässigen und reproduzierbaren Ergebnissen führende Überprüfung und/oder Kalibrierung einer in einem Fahrzeugsitz angeordneten Insassenerkennungseinrichtung ermöglicht.

Zur Lösung der Aufgabe sind eine Vorrichtung nach Anspruch 1 und ein Verfahren nach Anspruch 10 vorgesehen.

Die erfindungsgemäße Vorrichtung umfasst ein Kindersitzlager zur Aufbewahrung mindestens eines Kindersitzes, eine Fahrzeugsitzhalterung zur Aufnahme mindestens eines Fahrzeugsitzes und einen Roboter, durch den ein im Kindersitzlager gelagerter Kindersitz aus dem Kindersitzlager entnehmbar und an einen in der Fahrzeugsitzhalterung gehaltenen Fahrzeugsitz andrückbar ist.

Durch die Verwendung eines Roboters zum Entnehmen des Kindersitzes aus dem Kindersitzlager und Andrücken desselben an den Fahrzeugsitz kann die Überprüfung bzw. Kalibrierung der Insassenerkennungseinrichtung voll automatisiert erfolgen. Die Durchführung einer oder mehrerer Testreihen bzw. die Erstellung einer Testmatrix aus unterschiedlichen Kindersitzen, Fahrzeugsitzen, Einbaupositionen, Gurtspannungen und Kindersitzbelegungen ist daher nicht nur besonders schnell, sondern auch zuverlässig und vor allem reproduzierbar durchführbar.

Durch das Andrücken des Kindersitzes an den Fahrzeugsitz mit Hilfe des Roboters lassen sich grundsätzlich beliebige Gurtspannungen und Belegungen des Kindersitzes simulieren. Ein Gurtsystem zur Befestigung des Kindersitzes an dem Fahrzeugsitz ist nicht erforderlich. Deshalb wird erfindungsgemäß auch kein komplettes Kraftfahrzeug zur Überprüfung bzw. Kalibrierung der Insassenerkennungseinrichtung benötigt. Vielmehr ist ein in der Fahrzeugsitzhalterung gehaltener freistehender Fahrzeugsitz zur Durchführung der Tests ausreichend. Der Platzbedarf der erfindungsgemäßen Vorrichtung ist dadurch erheblich reduziert.

Vorteilhafte Ausführungsformen der Erfindung sind in den Unteransprüchen, der Beschreibung und der Zeichnung beschrieben.

So kann nach einer vorteilhaften Ausführungsform jeder Kindersitz zur Simulation möglicher Einbaustellungen und/oder Sitzbelegungen des Kindersitzes in verschiedenen vorbestimmten Relativpositionen bezüglich jedes Fahrzeugsitzes und/oder unterschiedlich stark an diesen andrückbar sein. Auf diese Weise können im Wesentlichen alle in der Praxis auftretenden Einbaumöglichkeiten bzw. Belegungen des Kindersitzes durch den Roboter simuliert und bei der Überprüfung bzw. Kalibrierung der Insassenerkennungseinrichtung berücksichtigt werden.

Vorzugsweise ist der Fahrzeugsitz mit wenigstens einer vorbestimmten Kraft/Drehmoment-Kombination beaufschlagbar, die einer definierten Kombination aus Belegung des Kindersitzes und Spannungen entspricht, welche bei einer Sicherung des Kindersitzes am Fahrzeugsitz in einem zur Sicherung verwendeten Gurt auftreten. In der Praxis auftretende Kombinationen aus Sitzbelegung und Gurtspannungen werden also in Kraft/Drehmoment-Kombinationen umgewandelt, die der Roboter entsprechend auf den Fahrzeugsitz ausüben kann. Auf diese Weise können Kombinationen von tatsächlich auftretenden Sitzbelegungen und Gurtspannungen exakt durch den Roboter simuliert werden.

Für unterschiedliche Kindersitze kann jeweils mindestens eine, insbesondere fahrzeugsitzabhängige, Kraft/Drehmoment-Kombinationen in einer Speichereinheit gespeichert sein. Da eine Vielzahl von unterschiedlichen Kindersitzen existiert, die sich unter anderem in ihrer Größe und in der Art ihrer Befestigung an dem Fahrzeugsitz unterscheiden, können die typischerweise auftretenden Gurtspannungen je nach Kindersitz stark variieren. Durch das Abspeichern mindestens einer Kraft/Drehmoment-Kombinationen für jeden zu testenden Kindersitztyp kann diese Vielfalt von Kindersitzen berücksichtigt und eine noch höhere Zuverlässigkeit und Reproduzierbarkeit des Testergebnisses erreicht werden.

Darüber hinaus können auch Angaben über die Geometrie jedes im Kindersitzlager gelagerten Kindersitzes und/oder Angaben über die Geometrie jedes in der Fahrzeugsitzhalterung aufgenommenen Fahrzeugsitzes in einer Speichereinheit gespeichert sein. Dies ermöglicht eine Berücksichtigung der baulichen Ausführung der Kindersitze bzw. Fahrzeugsitze und somit eine noch bessere Simulation der in der Praxis auftretenden Einbaupositionen und Befestigungsmöglichkeiten des Kindersitzes am Fahrzeugsitz. Dadurch werden die Zuverlässigkeit und Reproduzierbarkeit der Überprüfung bzw. Kalibrierung der Insassenerkennungseinrichtung noch weiter erhöht.

Bevorzugt weist der Roboter einen Koppel-/Sensorkopf zum Ankoppeln des Roboters an den Kindersitz und zum Messen von Kräften und Drehmomenten auf, die beim Andrücken des Kindersitzes an den Fahrzeugsitz auftreten. Der Koppel-/ Sensorkopf schafft somit nicht nur eine Verbindung zwischen Roboter und Kindersitz, sondern er ermöglicht auch eine Kontrolle darüber, dass die vorgegebenen, auf den Fahrzeugsitz auszu-übenden Kräfte und Drehmomente exakt eingehalten werden, wodurch eine noch höhere Zuverlässigkeit und Reproduzierbarkeit des Testergebnisses erreicht werden.

Jeder Kindersitz kann einen Flansch zur Ankopplung an den Roboter aufweisen. Dies ermöglicht es dem Roboter, an jeden Kindersitz des Kindersitzlagers anzukoppeln und ihn auf einfache Weise aus dem Lager zu entnehmen.

Vorzugsweise sind das Kindersitzlager und/oder die Fahrzeugsitzhalterung zumindest teilkreisförmig um den Roboter herum angeordnet. Der Roboter kann ferner einen Arbeitsbereich von 360° umfassen. Das Kindersitzlager und die Fahrzeugsitzhalterung können somit etwa einen Kreis bilden, in dessen Zentrum der Roboter angeordnet ist. Der Roboter kann in dieser Anordnung durch entsprechende Rotation und entsprechendes Ausfahren eines Roboterarmes jeden Kindersitz des Kindersitzlagers erreichen und auf jeden Fahrzeugsitz aufsetzen. Durch die etwa kreisförmige Anordnung von Kindersitzlager und Fahrzeughalterung ist der Platzbedarf der Vorrichtung minimiert.

Das Kindersitzlager kann eine Regaleinrichtung zur Aufnahme einer Vielzahl von Kindersitzen aufweisen. Die Kindersitze sind also nicht nur in einer Reihe nebeneinander gelagert sondern auch in mehreren Reihen übereinander gestapelt. Dies ermöglicht die Unterbringung einer Vielzahl von Kindersitzen auf vergleichsweise geringem Raum.

Vorzugsweise sind mehrere Fahrzeugsitze lösbar an der Fahrzeugsitzhalterung befestigbar. Die gleichzeitige Halterung von mehreren Fahrzeugsitzen ermöglicht eine besonders schnelle und somit zeitsparende Überprüfung bzw. Kalibrierung der Insassenerkennungseinrichtungen mehrerer Fahrzeugsitze. Dadurch, dass die Fahrzeugsitze lösbar an der Fahrzeugsitzhalterung befestigbar sind, lassen sich außerdem bereits getestete Fahrzeugsitze leicht gegen andere, noch zu testende Fahrzeugsitze austauschen.

Durch das erfindungsgemäße Verfahren und seine Ausführungsformen werden die voranstehend genannten Vorteile entsprechend erreicht.

Nachfolgend wird die vorliegende Erfindung rein beispielhaft anhand einer vorteilhaften Ausführungsform unter Bezugnahme auf die beigefügte Zeichnung beschrieben. Es zeigen:

Fig. 1 eine perspektivische Ansicht einer erfindungsgemäßen Vorrichtung;

Fig. 2 eine Draufsicht auf die Vorrichtung von Fig. 1;

Fig. 3 eine schematische Draufsicht auf die Vorrichtung von Fig. 1;

Fig. 4 einen mittels eines Sicherheitsgurts an einem Fahrzeugsitz befestigten Kindersitz sowie die in dem Sicherheitsgurt auf- tretenden Spannungen und die Gewichtskraft; und

Fig. 5 ein Koordinatensystem zur mathematischen Abbildung der in Fig. 4 dargestellten Kräfte.

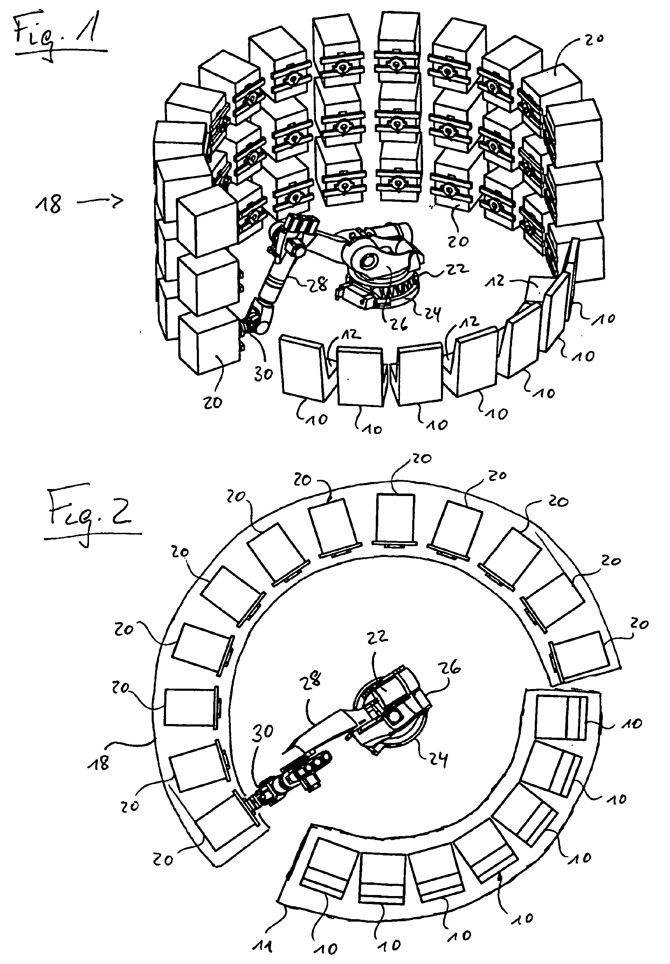

In Fig. 1 und 2 ist eine erfindungsgemäße Vorrichtung zur Überprüfung und/oder Kalibrierung einer Insassenerkennungseinrichtung eines Fahrzeugsitzes 10 dargestellt. Die Vorrichtung umfasst eine nicht gezeigte Fahrzeugsitzhalterung 11 zur Halterung von mehreren Fahrzeugsitzen 10. Im vorliegenden Beispiel ist die Fahrzeugsitzhalterung 11 zur Aufnahme von maximal sieben Fahrzeugsitzen 10 ausgelegt. Es ist aber ebenso möglich, die Fahrzeugsitzhalterung 11 so auszubilden, dass sie mehr als sieben Fahrzeugsitze 10 aufnehmen kann, oder sie entsprechend kleiner zu dimensionieren. Selbstverständlich ist es bei dem in Fig. 1 und 2 dargestellten Ausführungsbeispiel auch möglich, die Fahrzeugsitzhalterung 11 mit weniger als der maximalen Anzahl von sieben Fahrzeugsitzen 10 zu bestücken.

Die von der Fahrzeugsitzhalterung 11 aufgenommenen Fahrzeugsitze 10 sind in einer Reihe nebeneinander angeordnet. Dabei ist die Reihe der Fahrzeugsitze 10 derart gekrümmt, dass die Fahrzeugsitze 10 ein Kreissegment bilden, dessen Winkel im dargestellten Ausführungsbeispiel etwa 110° beträgt. Je nach Anzahl der Fahrzeugsitze 10 bzw. Krümmung der Fahrzeugsitzreihe kann der Winkel des durch die Fahrzeugsitze 10 beschriebenen Kreissegments auch größer oder kleiner als 110° sein.

Bei den Fahrzeugsitzen 10 handelt es sich im dargestellten Ausführungsbeispiel um unterschiedlich ausgestattete Sitze einer Modellreihe bzw. um unterschiedliche Typen von Fahrzeugsitzen. Denkbar ist aber auch eine Anordnung von zwei oder mehr gleichartigen Fahrzeugsitzen in einer Reihe, um die unten näher beschriebenen Messungen zu verifizieren.

Die Fahrzeugsitze 10 sind lösbar mit der Fahrzeugsitzhalterung 11 verbunden. Dabei ist der Mechanismus zur Befestigung der Fahrzeugsitze 10 an der Fahrzeugsitzhalterung 11 so ausgebildet, dass die Fahrzeugsitze 10 einerseits sicher und in einer genau vorgegebenen Position in der Fahrzeugsitzhalterung 11 gehalten sind und sich andererseits einfach aus der Fahrzeugsitzhalterung 11 lösen lassen, um einen schnellen Austausch von Fahrzeugsitzen zu ermöglichen. Jeder Fahrzeugsitz 10 kann beispielsweise mit einem Flansch oder Adapter versehen sein, der mittels einer Schraub- oder Rastverbindung an einem entsprechend ausgebildeten Gegenflansch oder Gegenadapter der Fahrzeugsitzhalterung 11 fixierbar ist.

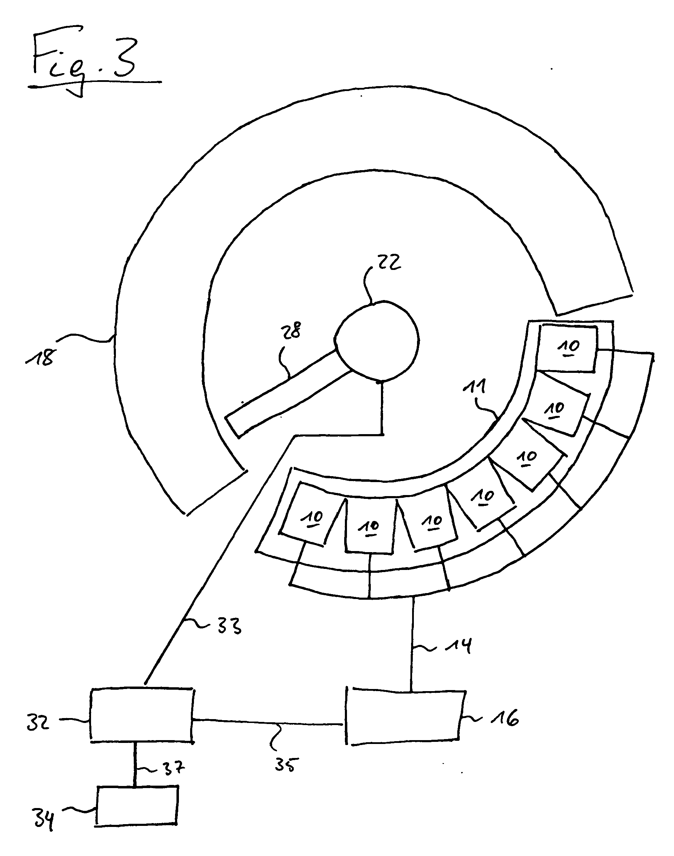

Jeder Fahrzeugsitz 10 ist ferner mit einer zu überprüfenden und/oder zu kalibrierenden Insassenerkennungseinrichtung versehen, die eine im Bereich des Sitzpolsters 12 des Fahrzeugsitzes 10 angeordnete Drucksensormatte umfasst. Die Insassenerkennungseinrichtung jedes Fahrzeugsitzes 10 kommuniziert über eine Leitung 14 mit einer Auswerteeinheit 16 (Fig. 3), welche eine Auswertung von durch die jeweilige Insassenerkennungseinrichtung ermittelten Messwerten ermöglicht.

Wie in Fig. 1 und 2 zu erkennen ist, weist die erfindungsgemäße Vorrichtung ferner ein Kindersitzlager 18 zur Aufbewahrung einer Vielzahl von Kindersitzen 20 auf. Das Kindersitzlager 18 umfasst eine Regaleinrichtung, in der die Kindersitze 20 in mehreren Reihen nebeneinander und übereinander untergebracht sind. Im dargestellten Ausführungsbeispiel weist die Regaleinrichtung des Kindersitzlagers 18 drei übereinander angeordnete Reihen von jeweils zwölf Kindersitzen 20 auf, es kann also maximal sechsunddreißig Kindersitze 20 aufnehmen. Selbstverständlich ist es nicht erforderlich, die Kapazität des Kindersitzlagers 18 vollständig auszuschöpfen, d.h. es können auch weniger als sechsunddreißig Kindersitze in dem Kindersitzlager 18 untergebracht sein. Umgekehrt ist es ebenso möglich, ein Kindersitzlager 18 mit einer größeren Kapazität vorzusehen, das beispielsweise für einige hundert Kindersitze 20 ausgelegt ist.

Das Kindersitzlager 18 ist gekrümmt und bildet ein Kreissegment, das der Fahrzeugsitzreihe gegenüber angeordnet ist. Der Winkel des durch das Kindersitzlager 18 gebildeten Kreissegments beträgt etwas mehr als 180° und sein Krümmungsradius ist etwas größer als der Krümmungsradius der Fahrzeugsitzreihe. Das Kindersitzlager 18 und die Reihe der Fahrzeugsitze 10 bilden im dargestellten Ausführungsbeispiel etwa einen Kreis, der nahezu geschlossen ist.

Etwa im Zentrum dieses Kreises ist ein Roboter 22 angeordnet, der einen am Boden fest verankerten Sockelabschnitt 24 und einen Arbeitsabschnitt 26 umfasst, welcher um eine vertikale Achse um 360° relativ zum Sockelabschnitt 24 verdrehbar ist. Der Roboter 22 überdeckt mit anderen Worten einen Arbeitsbereich von 360°. Der Arbeitsabschnitt 22 umfasst einen in einer vertikalen Ebene frei beweglichen Roboterarm 28, an dessen freiem Ende ein in alle Raumrichtungen frei beweglicher Koppel-/Sensorkopf 30 angeordnet ist.

Der Koppel-/Sensorkopf 30 dient zum Ankoppeln des Roboters 22 an die in dem Kindersitzlager 18 untergebrachten Kindersitze 20, um diese aus dem Kindersitzlager 18 zu entnehmen. Sowohl der Koppel-/Sensorkopf 30 als auch die Kindersitze 20 sind zu diesem Zweck mit entsprechenden Flanschen oder Adaptern ausgerüstet. Der Koppel-/Sensorkopf 30 umfasst ferner eine Kraftmessdose zur Messung von Kräften und Drehmomenten, die auftreten, wenn der Roboter 22 einen Fahrzeugsitz 10 mit einem Kindersitz 20 beaufschlagt, wie unten näher beschrieben wird.

Zur Steuerung des Roboters 22 ist eine Steuereinheit 32 vorgesehen, die über eine Leitung 33 mit dem Roboter 22 verbunden ist. Die Steuereinheit 32 dient nicht nur zur mechanischen Steuerung des Roboters 22, sondern sie kommuniziert auch mit dem Koppel-/ Sensorkopf 30, um die durch die Kraftmessdose des Koppel-/Sensorkopfes 30 erfassten Messdaten zu empfangen und auszuwerten. Zur Berücksichtigung der Messdaten der Kraftmessdose bei der Überprüfung bzw. Kalibrierung der Insassenerkennungseinrichtungen ist die Steuereinheit 32 durch eine Leitung 35 mit der Auswerteeinheit 16 verbunden (Fig. 3).

Erfindungsgemäß läuft die Überprüfung bzw. Kalibrierung der in den Fahrzeugsitzen 10 angeordneten Insassenerkennungseinrichtungen automatisch ab. Gesteuert durch die Steuereinheit 32 entnimmt der Roboter 22 mittels seines Koppel-/Sensorkopfes 30 einen ersten Kindersitz 20 aus dem Kindersitzlager 18 und drückt ihn auf das Sitzpolster 12 eines ersten Fahrzeugsitzes 10. Danach drückt der Roboter 22 denselben Kindersitz 20 auf einen zweiten Fahrzeugsitz 10, dann auf einen dritten Fahrzeugsitz 10 usw., bis eine Beaufschlagung aller in der Fahrzeugsitzhalterung 11 gehaltenen Fahrzeugsitze 10 stattgefunden hat. Anschließend legt der Roboter 22 den Kindersitz 20 wieder an der ihm zugeordneten Stelle des Kindersitzlagers 18 ab und entnimmt einen zweiten Kindersitz 20, der ebenfalls nacheinander auf jeden Fahrzeugsitz 10 aufgesetzt wird. Diese Prozedur wird wiederholt, bis jeder Fahrzeugsitz 10 mindestens einmal durch jeden Kindersitz 20 des Kindersitzlagers 18 beaufschlagt wurde.

Anstatt - wie voranstehend beschrieben wurde - einen aus dem Kindersitzlager 18 entnommenen Kindersitz 20 zunächst auf alle Fahrzeugsitze 10 aufzusetzen und erst dann den nächsten Kindersitz 20 aus dem Lager 18 zu entnehmen, ist es grundsätzlich auch möglich, der Reihe nach alle Kindersitze 20 aus dem Kindersitzlager 18 zu entnehmen und zunächst auf einen ersten Fahrzeugsitz 10 aufzusetzen, dann alle Kindersitze 20 auf den zweiten Fahrzeugsitz 10 aufzusetzen usw. Dieser Verfahrensablauf erweist sich aber als wesentlich zeitaufwendiger als der voranstehend beschriebene.

Das Andrücken der Kindersitze 20 an die Fahrzeugsitze 10 erfolgt für jeden Kindersitz 20 und jeden Fahrzeugsitz 10 nach einem genau festgelegten Schema. Zu diesem Zweck sind in einer mit der Steuereinheit 28 durch eine Leitung 37 verbundenen Speichereinheit 34 Informationen über die Geometrie jedes Kindersitzes 20 und jedes Fahrzeugsitzes 10 sowie über die in der Praxis auftretenden Kräfte und Drehmomente jeder möglichen oder zumindest zu testenden Kombination von Kindersitz 20 und Fahrzeugsitz 10 abgespeichert, die zur Steuerung des Roboters 22 durch die Steuereinheit 32 aus der Speichereinheit 34 entsprechend abgerufen werden können.

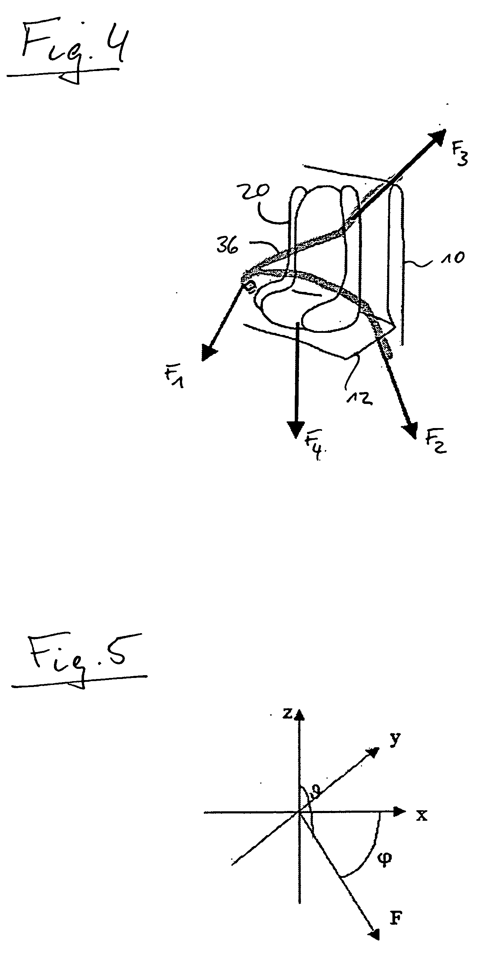

Auf diese Weise kann der Roboter 22 jeden Kindersitz 20 mit einer Kraft/Drehmoment-Kombination auf jeden Fahrzeugsitz 10 aufsetzen, die genau den Kräften $F_1$ bis $F_4$ entspricht (Fig. 4), die bei einer Befestigung des Kindersitzes 20 an dem Fahrzeugsitz 10 und bei einer bestimmten Belegung des Kindersitzes 20 als Kräfte in einem Sicherheitsgurt 36 und als Gewichtskraft auftreten. Durch die Beaufschlagung des Fahrzeugsitzes 10 mit einer bestimmten Kombination von Kraft und Drehmoment durch den Roboter 22 wird also jeweils eine bestimmte Belegung des Kindersitzes 20 sowie eine bestimmte Verspannung des Sicherheitsgurtes 36 simuliert. Die Ermittlung der Kraft/Drehmoment-Kombinationen wird weiter unten näher beschrieben.

Da es in der Praxis kaum möglich ist, einen Kindersitz 20 stets so zu verwenden, dass immer die gleichen Kräfte $F_1$ bis $F_3$ in dem Sicherheitsgurt 36 auftreten und immer die gleiche Sitzbelegung $F_4$ vorliegt, umfasst die Speichereinheit 34 für jeden Kindersitz 20 bzw. für jede Kombination von Kindersitz 20 und Fahrzeugsitz 10 ein Ensemble von mehreren Kraft/Drehmoment-Kombinationen, die beim Aufsetzen des jeweiligen Kindersitzes 20 auf den entsprechenden Fahrzeugsitz 10 abgearbeitet werden. Hierbei kann auch die Befestigungsposition des Kindersitzes 20 auf dem Fahrzeugsitz 10 berücksichtigt werden.

Auf diese Weise ist es möglich, für jede Kindersitz/Fahrzeugsitz-Kombination eine Vielzahl von in der Praxis möglichen Sitzbelegungszuständen und Befestigungsvarianten des Kindersitzes 20 am Fahrzeugsitz 10 durchzutesten, deren Anzahl mehrere 1000 oder noch mehr betragen kann. Dadurch, dass das erfindungsgemäße Verfahren robotergesteuert, d.h. automatisiert erfolgt, lassen sich die vorgesehen Testbedingungen trotz ihrer großen Anzahl schnell, zuverlässig und reproduzierbar durchführen.

Während der Roboter 22 einen Kindersitz 20 an einen Fahrzeugsitz 10 andrückt, wird die durch den Roboter 22 ausgeübte Kraft und das ausgeübte Drehmoment durch die in dem Koppelsensorkopf vorgesehene Kraftmessdose gemessen, mit der durch die Steuereinheit 28 aus der Speichereinheit 34 abgerufenen vorgegebenen Soll-Kraft/ Drehmoment-Kombination verglichen und im Fall einer Abweichung entsprechend angepasst.

Die von der Drucksensormatte der Insassenerkennungseinrichtung erfassten Messwerte werden für jede Paarung von Kindersitz 20 bzw. Fahrzeugsitz 10 in der Auswerteeinheit 16 ausgewertet und mit der entsprechend ausgeübten Kraft/ Drehmoment-Kombination in Korrelation gebracht. Wie bereits erwähnt wurde, ist die Auswerteeinheit 16 zu diesem Zweck mit der Steuereinheit 32 des Roboters 22 verbunden. Die Steuereinheit 32, die Speichereinheit 34 und die Auswerteeinheit 16 können in einer zentralen Recheneinheit zusammengefasst sein.

Die Auswerteeinheit 16 ermittelt, bei welchen Kraft/Drehmoment-Kombinationen die Insassenerkennungseinrichtung eine Belegung des Fahrzeugsitzes 10 korrekt erfasst bzw. bei welchen nicht. Bei einer fehlerhaften Funktion der Insassenerkennungseinrichtung kann diese entsprechend modifiziert werden. Alternativ oder zusätzlich kann eine Kalibrierung der Insassenerkennungseinrichtung insgesamt durchgeführt werden.

Zur Ermittlung der in der Speichereinheit 34 gespeicherten Kraft/Drehmoment-Kombinationen eines bestimmten Kindersitz/Fahrzeugsitz-Paares wird der entsprechende Kindersitz 20 auf den entsprechenden Fahrzeugsitz 10 aufgesetzt und unter praxisnahen Bedingungen mit einem Sicherheitsgurt 36 an dem Fahrzeugsitz 10 befestigt, wie es in Fig. 4 dargestellt ist. Zusätzlich kann eine Puppe (Dummy) in den Kindersitz 20 gesetzt werden, um eine Belegung des Kindersitzes 20 mit einem bestimmten Gewicht zu simulieren. Vorzugsweise erfolgt die Befestigung des Kindersitzes 20 in unterschiedlichen Relativpositionen bezüglich des Fahrzeugsitzes 10 sowie mit unterschiedlich starker Anspannung des Sicherheitsgurtes 36 und unterschiedlich schweren Dummys. Für jeden dieser Fälle werden die in Fig. 4 dargestellten, im Sicherheitsgurt 36 auftretenden Spannungen $F_1$ bis $F_3$ sowie die Gewichtskraft $F_4$ gemessen und gemäß dem in Fig. 5 gezeigten Koordinatensystem mathematisch dargestellt.

Aus den gemessenen Kräften $F_1$ bis $F_4$ lässt sich für jeden Belegungs- und Befestigungszustand des Kindersitzes 20 gemäß den folgenden Formeln eine resultierende Kraft F und ein resultierendes Drehmoment M errechnen, die im Schwerpunkt des Kindersitzes 20 auf diesen wirken:

$$\vec{F} = \sum \vec{F}_i = \sum \begin{pmatrix} f_x \\ f_y \\ f_z \end{pmatrix}$$

$$\vec{M} = \sum \vec{M}_i = \sum \vec{r}_i \ x \ \vec{F}_i = \sum \begin{pmatrix} r_x \\ r_y \\ r_z \end{pmatrix}_i x \begin{pmatrix} f_x \\ f_y \\ f_z \end{pmatrix}_i ,$$

wobei die Vektoren $F_i$ jeweils die Kräfte $F_1$ bis $F_4$ und die Vektoren $r_i$ jeweils die Lage der Kräfte $F_1$ bis $F_4$ relativ zum Schwerpunkt des Kindersitzes 20 darstellen.

Sobald die Kombinationen von resultierenden Kräften und Drehmomenten einmal ermittelt wurden, werden sie in der Speichereinheit 34 abgespeichert. Dort stehen sie für spätere Zugriffe durch die Steuereinheit 32 des Roboters 22 zur Verfügung und ermöglichen so eine beliebige Anzahl von automatischen Überprüfungen bzw. Kalibrierungen der Insassenerkennungseinrichtungen.

Eine optimale Simulation aller möglichen Kraft/Drehmoment-Kombinationen aller möglichen Kindersitz/Fahrzeugsitz-Kombinationen wird durch eine Ermittlung aller in Frage kommenden Kraft/ Drehmoment-Kombinationen für jede mögliche Kindersitz/Fahrzeugsitz-Kombination erreicht. Um den mit der Ermittlung der Kraft/Drehmoment-Kombinationen verbundenen Zeitaufwand und auch die Dauer des späteren Überprüfungs- bzw. Kalibrierungsverfahrens zu verringern, ist es jedoch auch möglich, die Kindersitze 20 und die Fahrzeugsitze 10 in Klassen ähnlicher Sitze einzuteilen, und für jede diese Klassen jeweils nur eine begrenzte Anzahl von Kraft/ Drehmoment-Kombinationen zu ermitteln.

Bezugszeichenliste

| | |
|---|---|
| 10 | Fahrzeugsitz |
| 11 | Fahrzeugsitzhalterung |
| 12 | Sitzpolster |
| 14 | elektrische Leitung |
| 16 | Auswerteeinheit |
| 18 | Kindersitzlager |
| 20 | Kindersitz |
| 22 | Roboter |
| 24 | Sockelabschnitt |
| 26 | Arbeitsabschnitt |
| 28 | Roboterarm |
| 30 | Koppelsensorkopf |
| 32 | Steuereinheit |
| 33 | Leitung |
| 34 | Speichereinheit |
| 35 | Leitung |
| 36 | Sicherheitsgurt |
| 37 | Leitung |

**Patentansprüche**

1. Vorrichtung zur Überprüfung und/oder Kalibrierung einer in einem Fahrzeugsitz (10) angeordneten Insassenerkennungseinrichtung mit

   einem Kindersitzlager (18) zur Aufbewahrung mindestens eines Kindersitzes (20),
   einer Fahrzeugsitzhalterung (11) zur Aufnahme mindestens eines Fahrzeugsitzes (10) und
   einem Roboter (22), durch den ein im Kindersitzlager (18) gelagerter Kindersitz (20) aus dem Kindersitzlager (18) entnehmbar und an einen in der Fahrzeugsitzhalterung (11) gehaltenen Fahrzeugsitz (10) andrückbar ist.

2. Vorrichtung nach Anspruch 1,
   **dadurch gekennzeichnet, dass**
   jeder Kindersitz (20) zur Simulation möglicher Einbaustellungen und/oder Sitzbelegungen des Kindersitzes (20) in verschiedenen vorbestimmten Relativpositionen bezüglich jedes Fahrzeugsitzes (10) und/oder unterschiedlich stark an diesen andrückbar ist.

3. Vorrichtung nach Anspruch 1 oder 2,
   **dadurch gekennzeichnet, dass**
   der Fahrzeugsitz (10) mit wenigstens einer vorbestimmten Kraft/Drehmoment-Kombination beaufschlagbar ist, die einer definierten Kombination aus Belegung des Kindersitzes (20) und Spannungen entspricht, welche bei einer Sicherung des Kindersitzes (20) am Fahrzeugsitz (10) in einem zur Sicherung verwendeten Gurt (36) auftreten.

4. Vorrichtung nach einem der vorherigen Ansprüche,
   **dadurch gekennzeichnet, dass**
   für unterschiedliche Kindersitze (20) jeweils mindestens eine, insbesondere fahrzeugsitzabhängige, Kraft/Drehmoment-Kombination in einer Speichereinheit (34) gespeichert ist.

5. Vorrichtung nach einem der vorherigen Ansprüche,
   **dadurch gekennzeichnet, dass**
   Angaben über die Geometrie jedes im Kindersitzlager (18) gelagerten Kindersitzes (20) und/oder Angaben über die Geometrie jedes in der Fahrzeugsitzhalterung aufgenommenen Fahrzeugsitzes (10) in einer Speichereinheit (34) gespeichert sind.

6. Vorrichtung nach einem der vorherigen Ansprüche,
   **dadurch gekennzeichnet, dass**
   der Roboter (22) einen Koppel-/Sensorkopf (30) zum Ankoppeln des Roboters (22) an den Kindersitz (20) und zum Messen von Kräften und Drehmomenten aufweist, die beim Andrücken des Kindersitzes (20) an den Fahrzeugsitz (10) auftreten.

7. Vorrichtung nach einem der vorherigen Ansprüche,
   **dadurch gekennzeichnet, dass**
   jeder Kindersitz (20) einen Flansch zur Ankopplung an den Roboter (22) aufweist.

8. Vorrichtung nach einem der vorherigen Ansprüche,
   **dadurch gekennzeichnet, dass**
   das Kindersitzlager (18) und/oder die Fahrzeugsitzhalterung (11) zumindest teilkreisförmig um den Roboter (22) herum angeordnet sind, und/oder dass der Roboter (22) einen Arbeitsbereich von 360° umfasst.

9. Vorrichtung nach einem der vorherigen Ansprüche,
   **dadurch gekennzeichnet, dass**
   das Kindersitzlager (18) eine Regaleinrichtung zur Aufnahme einer Vielzahl von Kindersitzen (20) aufweist und/oder dass mehrere Fahrzeugsitze (10) lösbar an der Fahrzeugsitzhalterung (11) befestigbar sind.

10. Verfahren zum Überprüfen und/oder Kalibrieren einer in einem Fahrzeugsitz (10) angeordneten Insassenerkennungseinrichtung, bei dem wenigstens ein Fahrzeugsitz (10) mit mindestens einem Kindersitz (20) beaufschlagt wird und jeweils eine entsprechende Reaktion der Insassenerkennungseinrichtung des Fahrzeugsitzes (10) ausgewertet wird, wobei die Beaufschlagung des Fahrzeugsitzes (10) durch den Kindersitz (20) mittels eines Roboters (22) erfolgt.

**11.** Verfahren nach Anspruch 10,
**dadurch gekennzeichnet, dass**
eine vorbestimmte Kraft/ Drehmoment-Kombination auf den Fahrzeugsitz (10) ausgeübt wird, die einer definierten Kombination aus Belegung des Kindersitzes (20) und Spannungen entspricht, welche bei einer Sicherung des Kindersitzes (20) am Fahrzeugsitz (10) in einem zur Sicherung verwendeten Gurt (36) auftreten.

**12.** Verfahren nach Anspruch 10 oder 11,
**dadurch gekennzeichnet, dass**
durch jeden Kindersitz (20) mehrere vorbestimmte Kraft/ Drehmoment-Kombinationen auf den Fahrzeugsitz (10) ausgeübt werden.

**13.** Verfahren nach einem der Ansprüche 10 bis 12,
**dadurch gekennzeichnet, dass**
für unterschiedliche Kindersitze (20) jeweils mindestens eine, insbesondere fahrzeugsitzabhängige, Gurtspannung/ Sitzbelegungs-Kombination ermittelt wird und eine entsprechende, insbesondere fahrzeugsitzabhängige, Kraft/ Drehmoment-Kombination errechnet und in einer Speichereinheit (34) abgespeichert wird.

**14.** Verfahren nach einem der Ansprüche 10 bis 13,
**dadurch gekennzeichnet, dass**
die Beaufschlagung des Fahrzeugsitzes (10) unter Berücksichtigung der jeweiligen, insbesondere in einer Speichereinheit (34) abgespeicherten, Kindersitzgeometrie und/oder Fahrzeugsitzgeometrie erfolgt.

**15.** Verfahren nach einem der Ansprüche 10 bis 14,
**dadurch gekennzeichnet, dass**
der Roboter (22) eine Vielzahl von Kindersitzen (20) nacheinander aus dem Kindersitzlager (18) entnimmt und jeweils jeden Fahrzeugsitz (10) damit beaufschlagt.

## Claims

**1.** An apparatus for the checking and/or calibration of an occupant detection device arranged in a vehicle seat (10) comprising
a child's seat store (18) for the storage of at least one child's seat (20);
a vehicle seat holder (11) for the reception of at least one vehicle seat (10); and
a robot (22) by which a child's seat (20) stored in the child's seat store (18) can be removed from the child's seat store (18) and can be pressed onto a vehicle seat (10) held in the vehicle seat holder (11).

**2.** An apparatus in accordance with claim 1, **characterized in that** any child's seat (20) can be pressed onto any vehicle seat in different pre-determined relative positions with respect to said vehicle seat (10) and/or can be pressed onto it with different strengths for the simulation of possible installation positions and/or seat occupancies of the child's seat (20).

**3.** An apparatus in accordance with claim 1 or claim 2, **characterized in that** the vehicle seat (10) can be loaded by at least one pre-determined force/torque combination which corresponds to a defined combination of occupancy of the child's seat (20) and tensions which occur on a securing of the child's seat (20) to the vehicle seat (10) in a belt (36) used for the securing.

**4.** An apparatus in accordance with any one of the preceding claims, **characterized in that** at least one respective force/torque combination, in particular dependent on a vehicle seat, is stored in a memory unit (34) for different child's seats (20).

**5.** An apparatus in accordance with any one of the preceding claims, **characterized in that** data on the geometry of every child's seat (20) stored in the child's seat store (18) and/or data on the geometry of every vehicle seat (10) received in the vehicle seat holder are stored in a memory unit (34).

**6.** An apparatus in accordance with any one of the preceding claims, **characterized in that** the robot (22) has a coupling head/sensor head (30) to couple the robot (22) to the child's seat (20) and to measure forces and torques occurring on the pressing of the child's seat (20) onto the vehicle seat (10).

7. An apparatus in accordance with any one of the preceding claims, **characterized in that** every child's seat (20) has a flange for the coupling to the robot (22).

8. An apparatus in accordance with any one of the preceding claims, **characterized in that** the child's seat store (18) and/or the vehicle seat holder (11) are arranged around the robot (22) at least as part of a circle; and/or **in that** the robot (22) covers a working area of 360°.

9. An apparatus in accordance with any one of the preceding claims, **characterized in that** the child's seat store (18) has a shelf device for the reception of a plurality of child's seats (20); and/or **in that** a plurality of vehicle seats (10) can be releasably secured to the vehicle seat holder (11).

10. A method of checking and/or calibrating an occupant detection device arranged in a vehicle seat (10), in which at least one vehicle seat (10) is loaded with at least one child's seat (20) and a respective corresponding reaction of the occupant detection device of the vehicle seat (10) is evaluated, with the loading of the vehicle seat (10) with the child's seat (20) taking place by means of a robot (22).

11. A method in accordance with claim 10, **characterized in that** a pre-determined force/torque combination is exerted on the vehicle seat (10) which corresponds to a defined combination of occupancy of the child's seat (20) and tensions which occur on a securing of the child's seat (20) to the vehicle seat (10) in a belt (36) used for the securing.

12. A method in accordance with claim 10 or claim 11, **characterized in that** a plurality of pre-determined force/torque combinations are exerted on the vehicle seat (10) by each child's seat (20).

13. A method in accordance with any one of the claims 10 to 12, **characterized in that** at least one belt tension/ seat occupancy combination, in particular dependent on a vehicle seat, is respectively determined for different child's seats (20) and a corresponding force / torque combination, in particular dependent on a vehicle seat, is calculated and stored in a memory unit (34).

14. A method in accordance with any one of the claims 10 to 13, **characterized in that** the loading of the vehicle seat (10) takes place while taking account of the respective child's seat geometry and/or vehicle seat geometry, which is/are in particular stored in a memory unit (34).

15. A method in accordance with any one of the claims 10 to 14, **characterized in that** the robot (22) removes a plurality of child's seats (20) successively from the child's seat store (18) and loads each respective vehicle seat (10) with them.

**Revendications**

1. Dispositif de contrôle et/ou d'étalonnage d'un dispositif de détection de passager placé dans un siège de véhicule (10) et comportant
   un support de siège pour enfant (18) destiné à maintenir au moins un siège pour enfant (20),
   un support de siège de véhicule (11) destiné à recevoir au moins un siège de véhicule (10) et
   un robot (22) permettant de retirer un siège pour enfant (20), monté dans le support de sièges pour enfant (18), du support de sièges pour enfant (18) et de le presser contre un siège de véhicule (10) maintenu dans le support de sièges de véhicule (11).

2. Dispositif selon la revendication 1, **caractérisé en ce que** chaque siège pour enfant (20) peut être pressé contre un siège de véhicule quelconque (10) dans différentes positions relatives prédéterminées par rapport à tout siège de véhicule et/ou avec différentes intensités afin de simuler n'importe quelles positions de montage et/ou occupations de siège pour enfant.

3. Dispositif selon la revendication 1 ou 2, **caractérisé en ce que** le siège de véhicule (10) peut être soumis à une combinaison prédéterminée force/couple de rotation qui correspond à une combinaison définie d'occupation de siège pour enfant (20) et de tensions qui apparaissent dans une ceinture de sécurité (36) lorsque l'on sécurise le siège pour enfant (20) sur le siège de véhicule (10).

4. Dispositif selon l'une des revendications précédentes, **caractérisé en ce que**, pour chacun des différents sièges pour enfant (20), au moins une combinaison force/couple de rotation, qui dépend notamment du siège de véhicule, peut être mémorisée dans une unité de mémorisation (34).

5. Dispositif selon l'une des revendications précédentes, **caractérisé en ce que** des données sur la géométrie de chaque siège pour enfant (20) monté dans le support de sièges pour enfant (18) et/ou des données sur la géométrie de chaque siège de véhicule (10) reçu dans le support de sièges pour véhicule sont mémorisées dans une unité de mémorisation (34).

6. Dispositif selon l'une des revendications précédentes, **caractérisé en ce que** le robot (22) comporte une tête de couplage/de capteur (30) destinée à coupler le robot (22) au siège pour enfant (20) et à mesurer des forces et des couples de rotation qui surviennent lorsque le siège pour enfant (20) est pressé contre le siège de véhicule (10).

7. Dispositif selon l'une des revendications précédentes, **caractérisé en ce que** chaque siège pour enfant (20) comporte un connecteur de couplage au robot (22).

8. Dispositif selon l'une des revendications précédentes, **caractérisé en ce que** le support de sièges pour enfant (18) et/ou le support de sièges de véhicule (11) sont placés au moins partiellement en cercle autour du robot (22) et/ou **en ce que** le robot peut couvrir une zone de travail de 360°.

9. Dispositif selon l'une des revendications précédentes, **caractérisé en ce que** le support de sièges pour enfant (18) comporte un dispositif de rayonnage destiné à recevoir un grand nombre de sièges pour enfant (20) et/ou **en ce que** plusieurs sièges de véhicule (10) peuvent être fixés de façon amovible au support de sièges de véhicule (11).

10. Procédé de contrôle et/ou d'étalonnage d'un dispositif de détection de passager placé dans un siège de véhicule (10), dans lequel on soumet à une contrainte au moins un siège de véhicule (10) comportant au moins un siège pour enfant (20) et on exploite à chaque fois une réaction correspondante du dispositif de détection de passager du siège de véhicule (10), la contrainte exercée par le siège pour enfant (20) sur le siège de véhicule (10) étant réalisée par un robot (22).

11. Procédé selon la revendication 10, **caractérisé en ce qu'**une combinaison prédéterminée force/couple de rotation est exercée sur le siège de véhicule (10) et correspond à une combinaison définie d'occupation du siège pour enfant (20) et de tensions qui apparaissent dans une ceinture de sécurité (36) lorsque l'on sécurise le siège pour enfant (20) sur le siège de véhicule (10).

12. Procédé selon la revendication 10 ou 11, **caractérisé en ce que** plusieurs combinaisons prédéterminées force/ couple de rotation sont exercées sur le siège de véhicule (10) pour chaque siège pour enfant (20).

13. Procédé selon l'une des revendications 10 à 12, **caractérisé en ce que** l'on détermine à chaque fois, pour différents sièges pour enfant (20), au moins une combinaison tension de ceinture/occupation de siège, qui dépend notamment du siège de véhicule, et on calcule une combinaison correspondante force/couple de rotation qui dépend notamment du siège de véhicule, et on la mémorise dans une unité de mémorisation (34).

14. Procédé selon l'une des revendications 10 à 13, **caractérisé en ce que** la contrainte exercée sur le siège de véhicule (10) est effectuée en tenant compte des géométries respectives du siège pour enfants et du siège de véhicule mémorisées notamment dans une unité de mémorisation (34).

15. Procédé selon l'une des revendications 10 à 14, **caractérisé en ce que** le robot (22) retire successivement un grand nombre de sièges pour enfant (20) du support de sièges pour enfant (10) et contraint chaque siège de véhicule (10) avec chacun de ces sièges pour enfant (20).

Fig. 1

Fig. 2

# Fig.3

22

28

18

11

10
10
10
10
10
10
10
10

33

14

32

37

35

16

34

Fig. 4

Fig. 5